(19) Europäisches Patentamt
European Patent Office
Office européen des brevets

(11) **EP 2 622 715 B1**

(12) **FASCICULE DE BREVET EUROPEEN**

(45) Date de publication et mention
de la délivrance du brevet:
**08.07.2015 Bulletin 2015/28**

(21) Numéro de dépôt: **11755379.2**

(22) Date de dépôt: **28.07.2011**

(51) Int Cl.:
***H02K 1/27*** *(2006.01)*     ***H02K 21/04*** *(2006.01)*

(86) Numéro de dépôt international:
**PCT/FR2011/051824**

(87) Numéro de publication internationale:
**WO 2012/042135 (05.04.2012 Gazette 2012/14)**

(54) **MACHINE ELECTRIQUE TOURNANTE SYNCHRONE AVEC ROTOR A DOUBLE EXCITATION**

ELEKTRISCHE DREHENDE SYNCHRONMASCHINE MIT EINEM DOPPELERREGTEN ROTOR

ROTATING ELECTRIC SYNCHRONOUS MACHINE WITH DOUBLE-EXCITATION ROTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.09.2010 FR 1057892**

(43) Date de publication de la demande:
**07.08.2013 Bulletin 2013/32**

(73) Titulaire: **Valeo Equipements Electriques Moteur
94046 Créteil Cedex (FR)**

(72) Inventeurs:
• **GIMENO, Anthony**
  **F-60200 Compiegne (FR)**
• **FRIEDRICH, Guy**
  **F-60350 Pierrefonds (FR)**

(56) Documents cités:
**WO-A2-2004/017496      DE-A1-102008 041 605
US-A1- 2006 290 316**

**Description**

La présente invention concerne une machine électrique tournante synchrone comprenant un rotor muni d'aimants permanents et d'un bobinage d'excitation. Plus particulièrement, l'invention concerne une machine de ce type pour des applications comme générateur et/ou moteur électrique de traction dans des véhicules automobiles électriques et hybrides.

De par leurs performances accrues en termes de rendement et de puissance massique et volumique, les machines synchrones à aimants permanents trouvent aujourd'hui une large application dans le domaine des véhicules automobiles. De plus, la disponibilité d'aimants permanents aux terres rares à grande échelle et à des conditions économiques acceptables rend viable le choix de ces machines électriques pour les nouvelles générations de véhicules automobiles.

Ces machines électriques sont réalisables dans une large gamme de puissance et de vitesse et trouvent des applications aussi bien dans les véhicules de type « tout électrique » que dans les véhicules à bas $CO_2$ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique («engine downsizing» en terminologie anglaise) en prévoyant une assistance électrique en couple qui fournit un appoint de puissance notamment lors des reprises plus, une traction à faible vitesse, par exemple en environnement urbain, peut également être assurée par ce même moteur électrique. Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Cependant, les machines électriques à excitation uniquement par aimants permanents présentent des difficultés de défluxage. Hors, dans un véhicule automobile, lorsque la machine électrique est utilisée comme moteur de traction sur différentes missions de circulation du véhicule, celle-ci doit pouvoir fonctionner à des régimes de charge et de vitesse variables et doit donc être défluxable pour atteindre la zone des hautes vitesses.

Les machines à double excitation sont plus facilement défluxable et offrent la possibilité de combiner dans leur rotor une densité d'énergie élevée apportée par les aimants permanents et une capacité à contrôler le flux magnétique dans l'entrefer apportée par la bobine d'excitation.

Une structure intéressante de machine à double excitation est divulguée dans l'article de Li Li et al. intitulé «Some armature reaction compensation methods, numerical design of experiments and optimization for a hybrid excitation machine » et publié dans IEMDC, Miami, USA (2009). Un autre exemple de machine connue est décrit dans le document DE-A-10 2008 041605.

La présente invention propose des machines électriques tournantes synchrones à double excitation avec une topologie de rotor du type de celle divulguée dans l'article ci-dessus et dont la conception a été optimisée afin d'accroître les performances et l'intérêt de ces machines pour l'industrie automobile.

Selon un premier aspect, la présente invention concerne une machine électrique tournante à double excitation comprenant un stator muni de bobinages statoriques et un rotor comprenant une pluralité de pôles Nord et pôles Sud alternés qui sont formés à partir d'une pluralité d'aimants permanents et d'une pluralité de bobines d'excitation ,

les aimants permanents étant logés dans des premiers évidements respectifs se prolongeant axialement et répartis régulièrement dans une partie circonférentielle de la masse magnétique du rotor de manière à définir une pluralité de sections polaires circonférentielles,

les bobines d'excitation étant logées dans des seconds évidements respectifs se prolongeant axialement et répartis régulièrement dans une partie intermédiaire de la masse magnétique du rotor, la partie intermédiaire étant située entre la partie circonférentielle et une partie centrale du rotor, chaque bobine d'excitation étant insérée dans une dent polaire radiale respective formant cloison entre deux seconds évidements consécutifs.

Conformément à l'invention, au moins une section polaire circonférentielle du rotor comprend au moins un moyen pour diriger une partie prédéterminée d'un flux magnétique produit par un aimant permanent correspondant vers le stator, de manière à introduire un couplage magnétique de valeur prédéterminée entre le rotor et le stator lorsqu'une la bobine d'excitation est traversée par un courant d'excitation sensiblement nul.

Selon une caractéristique particulière, moyen pour diriger comprend un étranglement de la masse magnétique du rotor.

Selon une autre caractéristique particulière, le moyen pour diriger comprend un évidement dédié prévu dans la masse magnétique du rotor et rempli d'air.

Selon encore une autre caractéristique particulière, le moyen pour diriger comprend un évidement dédié prévu dans la masse magnétique du rotor et rempli d'un matériau amagnétique.

Selon une forme de réalisation particulière de l'invention, l'étranglement du moyen pour diriger a une largeur inférieure ou égale à $(B_r/B_s).L_{PM}$,

$B_r$ étant une induction magnétique rémanente de l'aimant permanent,

$B_s$ étant une induction de saturation de la masse magnétique au niveau de l'étranglement, et

$L_{PM}$ étant une largeur de l'aimant permanent.

Selon une autre caractéristique particulière, la largeur de l'étranglement est supérieure à une limite inférieure prédéterminée.

La machine électrique tournante selon l'invention peut avantageusement être réalisée sous la forme d'un moteur électrique, d'un génératrice ou d'un moteur/ génératrice pour véhicule automobile.

D'autres caractéristiques et avantages de l'invention ressortiront à la lecture de la description suivante de plusieurs formes de réalisation particulières, en référence aux figures ci-dessous, dans lesquelles :

- la Fig.1 est une vue en coupe montrant une structure de principe d'une première forme de réalisation particulière d'une machine électrique tournante à double excitation selon l'invention;
- la Fig.2 est une vue partielle en coupe montrant une section polaire du rotor de la machine de la Fig.1; et
- la Fig.3 est une vue en coupe montrant une seconde forme de réalisation particulière d'une machine électrique tournante à double excitation selon l'invention.

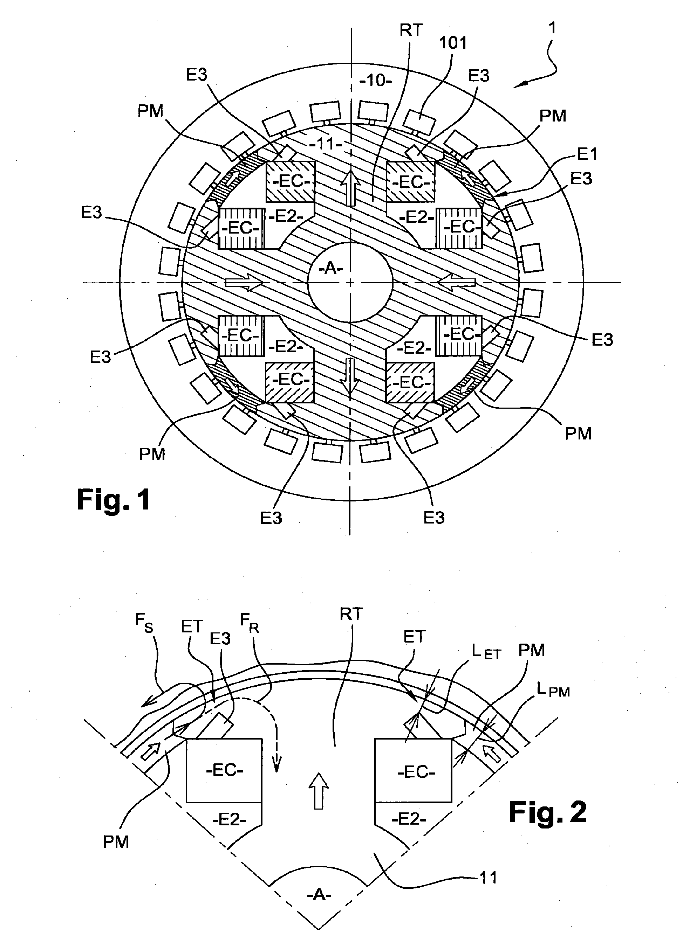

La Fig.1 montre une structure de principe d'une forme de réalisation particulière 1 d'une machine électrique tournante à double excitation selon l'invention qui comprend un stator 10 et un rotor 11. Le rotor 11 de la machine 1 comprend une pluralité de pôles saillants, Nord et Sud alternés, qui sont formés à partir d'une pluralité d'aimants permanents PM et d'une pluralité de bobines d'excitation EC.

Une réalisation concrète d'une telle machine selon l'invention est par exemple un moteur/génératrice de 8 à 10 KW pour des applications dans des véhicules automobiles du type dits «mild-hybrid». Dans son mode de fonctionnement en moteur, une telle machine peut être conçue pour le démarrage du moteur thermique, l'assistance en couple du moteur thermique ainsi que pour la traction électrique à faible vitesse du véhicule. Dans son mode de fonctionnement en génératrice, la machine peut fonctionner dans un mode alternateur normal ou dans un mode de freinage récupératif.

Cette machine 1 comprend un stator 10 ayant 24 encoches 101 et un rotor 11 comportant 4 pôles Nord et Sud alternés. Le rotor 11 comporte 4 aimants permanents PM. ,

Le stator 10 et le rotor 11 sont réalisés de manière classique avec des paquets de tôles métalliques formant des masses magnétiques.

Les encoches 101 du stator 10 sont prévues pour recevoir des bobinages statoriques (non représentés) et forment entre elles une pluralité de dents statoriques. Selon les formes de réalisation, les encoches 101 seront prévues pour loger des bobinages concentrés, bobinés sur des grosses dents, ou bien des bobinages distribués.

Les aimants PM sont disposés selon un montage dit « interpolaire » dans la partie circonférentielle du rotor 11 et se prolongent axialement sur toute la longueur du rotor 11. Les aimants PM sont logés dans des évidements interpolaires E1 respectifs et sont répartis dans la partie circonférentielle du rotor 11 de telle manière que deux aimants PM consécutifs, dans le sens de la circonférence, sont disposés avec des orientations polaires différentes, comme cela apparaît à la Fig.1. Par exemple, si PM1 et PM2 sont des aimants consécutifs, les orientations polaires respectives pourront être N-S et S-N ou bien S-N et N-S, toujours dans un même sens circonférentiel.

Les aimants PM sont de préférence des aimants permanents comprenant des terres rares tels que des aimants de type Néodyme-Fer-Bore (NeFeB), Samarium-Fer (SmFe), Samarium-Cobalt (SmCo) ou bien des aimants obtenus à partir de ferrites frittés ou liés.

Le rotor 11 comprend un alésage central débouchant à ses deux extrémités faciales et destiné à recevoir son arbre d'entraînement A. On notera que dans la présente invention l'arbre A pourra être réalisé dans un matériau magnétique.

Outre les évidements E1 contenant les aimants PM, le rotor 11 comprend également des évidements E2 et E3 qui se répètent pour chaque pôle et s'étendent axialement sur sensiblement toute la longueur du rotor.

Les évidements E2 sont prévus pour loger des bobines d'excitation EC dans le rotor 11. Les évidements E2 sont situés sous les aimants PM, avec autant d'évidement E2 que d'aimants PM. Deux évidements E2 consécutifs sont séparés par une cloison radiale formant dent polaire RT autour de laquelle est enroulée une bobine d'excitation EC correspondante. Les bobines d'excitation EC peuvent être reliées électriquement selon des montages série, parallèle ou série/parallèle.

On notera que certains évidements E2 pourront dans certaines formes de réalisation de la machine 1 selon l'invention être utilisés pour des tirants d'assemblage du rotor 11.

Les évidements E3 débouchent ici dans les évidements E2 et ont pour fonction de contribuer au contrôle du flux magnétique. On notera que ces évidements E3 ont aussi un effet bénéfique sur la réduction de l'inertie du rotor.

Plus précisément, les évidements E3 autorisent un dimensionnement du couplage magnétique entre le rotor 11 et le stator 10 à faible excitation, ou excitation nulle, fournie par les bobines d'excitation EC. Il est ainsi possible d'assurer un couplage magnétique talon entre le rotor 11 et le stator 10 lorsque les bobines d'excitation EC sont peu ou pas alimentées en courant d'excitation.

En référence à la Fig.2, la fonction remplit par les évidements E3 est maintenant décrite en détail, sachant que le fonctionnement décrit est identique pour tous les pôles du rotor 11.

A la Fig.2, il est montré un état de fonctionnement de la double excitation dans lequel le courant d'excitation fourni à la bobine d'excitation EC est nul. Dans cet état, les évidements E3 réalisés dans la masse magnétique du pôle créent des barrières de flux qui s'opposent à un bouclage total du flux magnétique produits par les aimants PM à travers la masse magnétique du rotor 11.

Comme montré à la Fig.2, dans l'état de fonctionnement ci-dessus, le flux magnétique des aimants est alors composé d'un flux de couplage stator, désigné $F_S$, qui circule à travers le stator 10 et d'un flux de bouclage rotor, désigné $F_R$, qui circule à travers le rotor 10. L'invention autorise un dimensionnement de la part du flux $F_S$ par rapport au flux $F_R$, ou inversement, de manière à dimensionner le couplage magnétique entre le rotor 11 et le stator 10 lorsque les bobines d'excitation EC sont peu ou pas alimentées en courant d'excitation.

Lorsque la bobine d'excitation EC est alimentée en courant de manière significative, le flux magnétique produit par celle-ci (non représenté) s'oppose au flux de bouclage rotor et la totalité du flux magnétique produit par les aimants circule alors dans le stator 10.

Il est ainsi possible, grâce à l'invention, de fournir une machine à double excitation avec aimants permanents dans laquelle un couplage magnétique talon, dimensionnable, est assuré entre le rotor et le stator lorsque le rotor est peu ou pas excité par un courant d'excitation.

Comme montré à la Fig.2, l'évidement E3 crée, dans la masse magnétique du rotor, un étranglement ET entre l'évidement E3 et la circonférence extérieure du rotor. Cet étranglement ET permet de limiter le flux magnétique de bouclage rotor $F_R$ du fait de la réluctance magnétique introduite en mode linéaire et/ou de la saturation magnétique.

On notera que le paramètre de la largeur d'étranglement $L_{ET}$ (montrée à la Fig.2) est le paramètre dimensionnant pour régler le couplage magnétique entre le rotor et le stator dans le mode de faible excitation ou excitation nulle.

Selon les applications, les évidements E3 devront être optimisés par des simulations sur les lignes de champ magnétique de manière à trouver le meilleur compromis possible notamment entre un fonctionnement en mode de générateur électrique et un fonctionnement en mode de moteur électrique, dans le cas par exemple d'une machine réversible.

Les mesures et essais effectués par l'entité inventive ont montrés qu'un fonctionnement en saturation magnétique de l'étranglement ET est favorable dans le cas d'un fonctionnement de la machine en moteur électrique. Ce fonctionnement en saturation magnétique peut cependant présenter aussi un intérêt pour un fonctionnement de la machine en générateur électrique, dans certaines applications.

En limite de saturation magnétique dans l'étranglement ET, la relation suivante est vérifiée :

$$B_r.L_{PM} = B_S.L_{ET} \qquad\qquad (1)$$

dans laquelle :

$B_r$ est l'induction magnétique rémanente de l'aimant PM,
$B_s$ est l'induction de saturation de la tôle métallique au niveau de l'étranglement ET, et
$L_{PM}$ est la largeur de l'aimant PM.

De la relation (1), il vient l'égalité :

$$L_{ET} = (B_r/B_S).L_{PM} \qquad\qquad (2)$$

La saturation magnétique interviendra donc pour une largeur d'étranglement $L_{ET}$ inférieure ou égale à $(B_r/B_s).L_{PM}$, sachant cependant que la limite inférieure de $L_{ET}$ est imposée par la résistance mécanique des matériaux, à savoir, la résistance mécanique des tôles métalliques formant le rotor 11. Les forces centrifuges importantes qui peuvent s'exercer sur le rotor doivent être prises en compte pour le dimensionnement de cette limite inférieure de $L_{ET}$.

Dans un fonctionnement en générateur électrique, à faible excitation électrique, il peut être intéressant, par un dimensionnement adapté de la largeur d'étranglement $L_{ET}$ de canaliser vers le stator le flux magnétique apporté par les aimants PM, ou une partie de celui-ci, de manière à ce que celui-ci ne s'oppose pas au flux créé par la bobine d'excitation EC. Cette possibilité apportée par l'invention permet, par exemple, de régler le débit talon dans un alternateur de véhicule automobile. Le débit talon correspond dans un alternateur de véhicule automobile à un courant maximal que doit débiter celui-ci à une vitesse de rotation de 21000 tr/mn et sans excitation électrique.

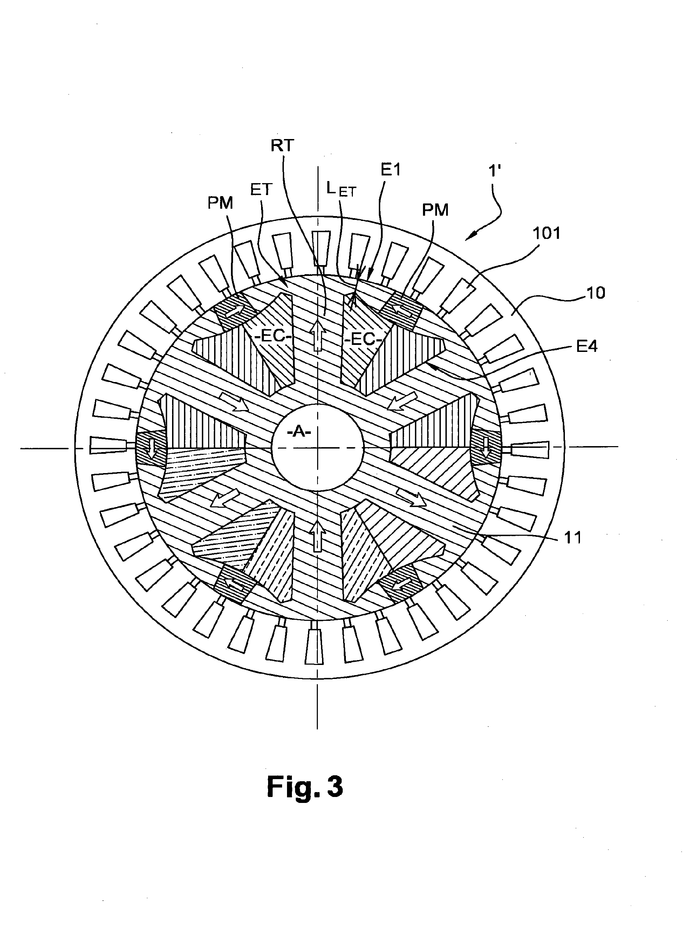

La Fig.3 montre une seconde forme de réalisation 1' de la machine selon l'invention. Cette forme de réalisation correspond à une application concrète de l'invention, sachant que la première forme de réalisation décrite plus haut en référence à la Fig.1 est davantage une réalisation de principe, non optimisée pour une application industrielle.

La machine 1' comprend un stator 10 ayant 36 encoches 101 et un rotor 11 comportant 6 pôles Nord et Sud alternés. Le rotor 11 comporte 6 aimants permanents PM. Cette machine 1' se différencie aussi de la machine 1 de la Fig.1 essentiellement par la configuration des évidements. En effet, dans cette forme de réalisation, les fonctions des évidements E2 et E3 dans une section pôlaire de la machine 1 sont remplies par un même évidement E4 dont la forme est définie de manière à introduire des étranglements ET ayant la même fonction que ceux de la machine 1.

Dans la machine 1, les évidements E3 contiennent de l'air. Dans la machine 1', les évidements E4 sont remplis au mieux par le cuivre des bobines d'excitation EC. On notera que d'autres applications de l'invention pourront comprendre des évidements E3 qui seront eux remplis avec des matériaux amagnétiques, voire magnétiques mais avec une faible densité.

**Revendications**

**1.** Machine électrique tournante à double excitation comprenant un stator (10) muni de bobinages statoriques et un rotor (11) comprenant une pluralité de pôles Nord et pôles Sud alternés qui sont formés à partir d'une pluralité d'aimants permanents (PM) et d'une pluralité de bobines d'excitation (EC),

lesdits aimants permanents (PM) étant logés dans des premiers évidements respectifs (E1) se prolongeant axialement et répartis régulièrement dans une partie circonférentielle de la masse magnétique dudit rotor (11) de manière à définir une pluralité de sections polaires circonférentielles,

lesdites bobines d'excitation (EC) étant logées dans des seconds évidements respectifs (E2; E4) se prolongeant axialement et répartis régulièrement dans une partie intermédiaire de la masse magnétique dudit rotor (11), ladite partie intermédiaire étant située entre ladite partie circonférentielle et une partie centrale (A) dudit rotor (11), chaque dite bobine d'excitation (EC) étant insérée dans une dent polaire radiale respective (RT) formant cloison entre deux dits seconds évidements (E2; E4) consécutifs,

**caractérisée en ce que** au moins une dite section polaire circonférentielle comprend au moins un moyen (E3, ET) pour diriger une partie prédéterminée (Fs) d'un flux magnétique produit par un dit aimant permanent correspondant (PM) vers ledit stator (10) de manière à introduire un couplage magnétique de valeur prédéterminée entre ledit rotor (11) et ledit stator (10) lorsqu'une dite bobine d'excitation (EC) est traversée par un courant d'excitation sensiblement nul.

**2.** Machine électrique tournante selon la revendication 1, **caractérisée en ce que** ledit moyen pour diriger comprend un étranglement (ET) de la masse magnétique dudit rotor (11).

**3.** Machine électrique tournante selon la revendication 2, **caractérisée en ce que** ledit moyen pour diriger comprend un évidement dédié (E3) prévu dans la masse magnétique dudit rotor (11) et rempli d'air.

**4.** Machine électrique tournante selon la revendication 2, **caractérisée en ce que** ledit moyen pour diriger comprend un évidement dédié (E3) prévu dans la masse magnétique dudit rotor (11) et rempli d'un matériau amagnétique.

**5.** Machine électrique tournante selon l'une quelconque des revendications 2 à 4, **caractérisée en ce que** ledit étranglement (ET) a une largeur d'étranglement ($L_{TE}$) inférieure ou égale à ($B_r/B_s$).$L_{PM}$,

$B_r$ étant une induction magnétique rémanente dudit aimant permanent (PM),

$B_s$ étant une induction de saturation de la masse magnétique au niveau dudit étranglement (ET), et

$L_{PM}$ étant une largeur dudit aimant permanent (PM).

**6.** Machine électrique tournante selon la revendication 2 ou 3, **caractérisée en ce que** ladite largeur d'étranglement ($L_{ET}$) est supérieure à une limite inférieure prédéterminée.

**7.** Machine électrique tournante selon l'une quelconque des revendications 1 à 6, **caractérisée en ce qu'**elle est réalisée sous la forme d'un moteur électrique pour véhicule automobile.

**8.** Machine électrique tournante selon l'une quelconque des revendications 1 à 6, **caractérisée en ce qu'**elle est réalisée sous la forme d'une génératrice électrique pour véhicule automobile.

**9.** Machine électrique tournante selon l'une quelconque des revendications 1 à 8, **caractérisée en ce qu'**elle est réalisée sous la forme d'un moteur/génératrice pour véhicule automobile.

**Patentansprüche**

1. Drehende elektrische Maschine mit doppelter Erregung, die einen mit Statorwicklungen versehenen Stator (10) und einen Rotor (11), der mehrere abwechselnde Nord- und Südpole aufweist, die anhand mehrerer Permanentmagneten (PM) und mehrerer Erregungsspulen (EC) gebildet sind, umfasst,
   wobei sich die Permanentmagneten (PM) in jeweiligen ersten Aussparungen (E1) befinden und axial verlängert sind und in einem Umfangsteil der magnetischen Masse des Rotors (11) regelmäßig verteilt sind, derart, dass in Umfangsrichtung mehrere polare Abschnitte definiert sind,
   wobei sich die Erregungsspulen (EC) in jeweiligen zweiten Aussparungen (E2; E4) befinden und axial verlängert sind und in einem Zwischenteil der magnetischen Masse des Rotors (11) regelmäßig verteilt sind, wobei sich der Zwischenteil zwischen dem Umfangsteil und einem Mittelteil (A) des Rotors (11) befindet, wobei jede Erregungsspule (EC) in einen jeweiligen radialen polaren Zahn (RT), der zwischen zwei aufeinanderfolgenden zweiten Aussparungen (E2; E4) eine Trennwand bildet, eingesetzt ist,
   **dadurch gekennzeichnet, dass** mindestens ein polarer Abschnitt in Umfangsrichtung mindestens ein Mittel (E3, ET) aufweist, um einen vorbestimmten Abschnitt (Fs) von einem Magnetfluss, der von einem entsprechenden Permanentmagneten (PM) erzeugt ist, zu dem Stator (10) zu lenken, um eine magnetische Kopplung von einem vorbestimmten Wert zwischen dem Rotor (11) und dem Stator (10) einzuführen, wenn eine Erregungsspule (EC) von einem Erregerstrom durchflossen ist, der im Wesentlichen gleich Null ist.

2. Drehende elektrische Maschine nach Anspruch 1, **dadurch gekennzeichnet, dass** das Mittel zum Lenken eine Verengung (ET) der magnetischen Masse des Rotors (11) aufweist.

3. Drehende elektrische Maschine nach Anspruch 2, **dadurch gekennzeichnet, dass** das Mittel zum Lenken eine zugeordnete Aussparung (E3) aufweist, die in der magnetischen Masse des Rotors (11) vorgesehen ist und mit Luft gefüllt ist.

4. Drehende elektrische Maschine nach Anspruch 2, **dadurch gekennzeichnet, dass** das Mittel zum Lenken eine zugeordnete Aussparung (E3) aufweist, die in der magnetischen Masse des Rotors (11) vorgesehen ist und mit einem nichtmagnetischen Material gefüllt ist.

5. Drehende elektrische Maschine nach einem der Ansprüche 2 bis 4, **dadurch gekennzeichnet, dass** die Verengung (ET) eine Verengungsbreite ($L_{TE}$) aufweist, die kleiner oder gleich $(B_r/B_s).L_{PM}$ ist,
   wobei $B_r$ eine Restmagnetinduktion des Permanentmagneten (PM) ist,
   wobei $B_s$ eine Sättigungsinduktion der magnetischen Masse an der Verengung (ET) ist und
   $L_{PM}$ eine Breite des Permanentmagneten (PM) ist.

6. Drehende elektrische Maschine nach Anspruch 2 oder 3, **dadurch gekennzeichnet, dass** die Verengungsbreite ($L_{TE}$) größer als ein vorbestimmter unterer Grenzwert ist.

7. Drehende elektrische Maschine nach einem der Ansprüche 1 bis 6, **dadurch gekennzeichnet, dass** sie in der Form eines Elektromotors für ein Kraftfahrzeug verwirklicht ist.

8. Drehende elektrische Maschine nach einem der Ansprüche 1 bis 6, **dadurch gekennzeichnet, dass** sie in der Form eines elektrischen Generators für ein Kraftfahrzeug verwirklicht ist.

9. Drehende elektrische Maschine nach einem der Ansprüche 1 bis 8, **dadurch gekennzeichnet, dass** sie in der Form eines Motors/Generators für ein Kraftfahrzeug verwirklicht ist.

**Claims**

1. Double excitation rotary electric machine comprising a stator (10) fitted with stator windings and a rotor (11) comprising a plurality of alternating north poles and south poles which are formed from a plurality of permanent magnets (PM) and from a plurality of excitation coils (EC),
   the said permanent magnets (PM) being housed in respective first recesses (E1) extending axially and uniformly distributed in a circumferential part of the magnetic mass of the said rotor (11) so as to define a plurality of circumferential pole sections,

the said excitation coils (EC) being housed in respective second recesses (E2; E4) extending axially and uniformly distributed in an intermediate part of the magnetic mass of the said rotor (11), the said intermediate part being situated between the said circumferential part and a central part (A) of the said rotor (11), each said excitation coil (EC) being inserted in a respective radial pole tooth (RT) that forms a partition between two consecutive said second recesses (E2; E4),

**characterized in that** at least one said circumferential pole section comprises at least one means (E3, ET) for directing a predetermined part (Fs) of a magnetic flux produced by one said corresponding permanent magnet (PM) towards the said stator (10) so as to introduce magnetic coupling of predetermined strength between the said rotor (11) and the said stator (10) when a substantially zero excitation current passes through one said excitation coil (EC).

2. Rotary electric machine according to Claim 1, **characterized in that** the said means for directing comprises a restriction (ET) of the magnetic mass of the said rotor (11).

3. Rotary electric machine according to Claim 2, **characterized in that** the said means for directing comprises a dedicated recess (E3) provided in the magnetic mass of the said rotor (11) and filled with air.

4. Rotary electric machine according to Claim 2, **characterized in that** the said means for directing comprises a dedicated recess (E3) made in the magnetic mass of the said rotor (11) and filled with a non-magnetic material.

5. Rotary electric machine according to any one of Claims 2 to 4, **characterized in that** the said restriction (ET) has a restriction width ($L_{TE}$) less than or equal to ($B_r/B_s$). $L_{PM}$,

   $B_r$ being a remanent magnetic inductance of the said permanent magnet (PM),
   $B_s$ being a saturation inductance of the magnetic mass at the said restriction (ET), and
   $L_{PM}$ being a width of the said permanent magnet (PM).

6. Rotary electric machine according to Claim 2 or 3, **characterized in that** the said restriction width ($L_{ET}$) is above a predetermined lower limit.

7. Rotary electric machine according to any one of Claims 1 to 6, **characterized in that** it is produced in the form of an electric motor for a motor vehicle.

8. Rotary electric machine according to any one of Claims 1 to 6, **characterized in that** it is produced in the form of an electric generator for a motor vehicle.

9. Rotary electric machine according to any one of Claims 1 to 8, **characterized in that** it is produced in the form of a motor/generator for a motor vehicle.

**Fig. 1**

**Fig. 2**

**Fig. 3**

**RÉFÉRENCES CITÉES DANS LA DESCRIPTION**

**Documents brevets cités dans la description**

- DE 102008041605 A